# EUROPÄISCHE PATENTANMELDUNG

(11) **EP 3 910 206 A1**
(43) Veröffentlichungstag der Anmeldung: **17.11.2021**
(21) Anmeldenummer: 20174148.5
(22) Anmeldetag: 12.05.2020
(51) Int. Cl.: F16C 17/02, F16C 33/20, F16C 33/12, F16C 33/14

(54) **GLEITLAGER, GLEITLAGERANORDNUNG, GETRIEBE UND ANTRIEBSSTRANG FÜR WINDKRAFTANLAGE**

(71) Anmelder: Flender GmbH, 46395 Bocholt (DE)
(72) Erfinder: Kleine-Brockhoff, Ralf, 46284 Dorsten (DE); Meyer, Thomas, 52223 Stolberg (DE)
(74) Vertreter: Michalski Hüttermann & Partner Patentanwälte mbB

(57) **Zusammenfassung**

Die Erfindung betrifft ein Gleitlager (30) für ein Getriebe (50), das eine erste Lagerkomponente (10) umfasst, die relativ zu einer zweiten Lagerkomponente (20) drehbar ausgebildet ist. Zwischen der ersten und zweiten Lagerkomponente (10, 20) ist an einer Kontaktfläche (33) ein Schmierstofffilm (35) ausbildbar. Die erste Lagerkomponente (10) ist zumindest teilweise aus einem Gleitlagerwerkstoff (16) hergestellt. Erfindungsgemäß weist die zweite Lagerkomponente (20) an der Kontaktfläche (33) eine Gleitbeschichtung (26) auf. Die Erfindung betrifft auch eine Gleitlageranordnung (40) mit einem entsprechenden Gleitlager (30) und Getriebe (50) mit einer solchen Gleitlageranordnung (40). Ferner betrifft die Erfindung einen Antriebsstrang (60) für eine Windkraftanlage (70), der über ein dementsprechendes Getriebe (50) verfügt und eine korrespondierende Windkraftanlage (70). Des Weiteren betrifft die Erfindung eine Industrie-Applikation (80), die mit einem solchen Getriebe (50) ausgestattet ist.

## Beschreibung

Die Erfindung betrifft ein Gleitlager und eine entsprechende Gleitlageranordnung. Die Erfindung betrifft auch ein Getriebe, das über eine solche Gleitlageranordnung verfügt, und einen Antriebsstrang für eine Windkraftanlage, der mit einem korrespondierenden Getriebe ausgestattet ist.

Aus der Druckschrift WO 2011/127509 A1 ist ein Getriebe für eine Windkraftanlage bekannt, das als Planetengetriebe ausgebildet ist und einen Planetenträger mit einer Planetenradachse umfasst. Auf der Planetenradachse ist eine Mehrschichtgleitlager, das zumindest einer Stützschicht und einer Gleitfläche besteht, die auf der Stützschicht aufgebracht ist. Zwischen der Stützschicht und der Gleitschicht kann ferner eine Lagermetallschicht, eine Bindeschicht und/oder eine Diffusionssperrschicht ausgebildet sein.

Die Patentanmeldung DE 10 2007 058 627 A1 offenbart ein Gleitlager eines Bauwerks, das ein Gleitlagerelement aus einem reibungsarmen Kunststoff und einen Gegengleitpartner umfasst, der mit einem vor Korrosion schützenden Werkstoff beschichtet ist. Der Gegengleitpartner ist als Stahlkörper ausgebildet, der mit einem Gleitlack beschichtete ist, der per Pulverbeschichtungstechnologie aufgebracht ist.

Die Offenlegungsschrift DE 10 2016 013 451 A1 zeigt eine Lageranordnung zur Lagerung einer Kurbelwelle, die eine erste und zweite Lagerschale umfasst. Jede der Lagerschalen weist einen Stahlgrundkörper auf, der eine Gleitschicht aufweist, auf der eine Polymerschicht angeordnet ist.

Gleitlager werden in einer Vielzahl an technischen Anwendungsgebieten eingesetzt, in denen steigende Anforderungen in puncto Leistungsfähigkeit, Langlebigkeit und Wirtschaftlichkeit bestehen. Die gilt beispielsweise für Planetengetriebe, insbesondere in Windkraftanlagen oder Industrie-Applikationen. Der Erfindung liegt die Aufgabe zugrunde, ein Gleitlager bereitzustellen, das in zumindest einer der oben skizzierten Anforderungen eine Verbesserung bietet.

Die Aufgabenstellung wird durch ein erfindungsgemäßes Gleitlager gelöst. Das Gleitlager umfasst eine erste und eine zweite Lagerkomponente, die die relativ zueinander drehbar ausgebildet sind. Das relative Drehen zwischen der ersten und zweiten Lagerkomponente erfolgt hierbei um eine Drehachse des Gleitlagers. Zwischen der ersten und zweiten Lagerkomponente ist im Betrieb des Gleitlagers ein Schmierstofffilm ausbildbar, durch den das relative Drehen zwischen der ersten und zweiten Lagerkomponente erleichtert wird. Der Schmierstofffilm wird an einer Kontaktfläche ausgebildet, an der in einem hydrodynamischen oder hydrostatischen Betrieb des die erste und zweite Lagerkomponente nur durch den Schmierstofffilm getrennt sind. Die Kontaktfläche erstreckt sich im Wesentlichen entlang der Drehachse des Gleitlagers entlang der ersten und zweiten Lagerkomponente. Die erste Lagerkomponente ist dabei an der Kontaktfläche zumindest teilweise aus einem Gleitlagerwerksoff hergestellt. Erfindungsgemäß weist die zweite Lagerkomponente an der Kontaktfläche eine Gleitbeschichtung auf. Dementsprechend liegen sich im erfindungsgemäßen Gleitlager zumindest abschnittsweise der Gleitlagerwerkstoff der ersten Lagerkomponente und die Gleitbeschichtung der zweiten Lagerkomponente, getrennt durch den Schmierstoff, gegenüber. Dadurch gleitet die Gleitbeschichtung der ersten Lagerkomponente, unterstützt durch den Schmierstofffilm, auf dem Gleitlagerwerkstoff der zweiten Lagerkomponente.

Durch die Gleitbeschichtung der ersten Lagerkomponente weist diese eine reduzierte Oberflächenrauigkeit auf. Ebenso weist der Gleitlagerwerkstoff der zweiten Lagerkomponente eine reduzierte Oberflächenrauigkeit auf. Dementsprechend wird ein Einlauf der ersten Lagerkomponente erleichtert. Insbesondere wird ein Herausbrechen von Partikeln aus der Oberfläche der ersten Lagerkomponente vermieden und dadurch einem übermäßigen und/oder frühzeitigen Verschleiß des Gleitlagers vorgebeugt. Ebenso kann eine Einlaufphase für das Gleitlager verkürzt oder darauf verzichtet werden. Hierdurch ist das erfindungsgemäße Gleitlager schneller einsatzfähig, und somit besonders wirtschaftlich. Das beanspruchte Gleitlager erfordert hierzu gegenüber bekannten Lösungen keine zusätzlichen Komponenten, Beschichtungen, Behandlungsschritte oder Fertigungsschritte. Dadurch, dass der Gleitlagerwerkstoff und die Gleitbeschichtung auf unterschiedlichen Lagerkomponenten aufgebracht sind, können die erste und zweite Lagerkomponente gleichzeitig bearbeitet werden, was die Fertigung des erfindungsgemäßen Gleitlagers weiter vereinfacht. Das erfindungsgemäße Gleitlager weist insgesamt eine erhöhte Zuverlässigkeit und erhöhte Wirtschaftlichkeit auf.

In einer Ausführungsform des beanspruchten Gleitlagers wird durch die Gleitbeschichtung ein Rauhigkeitsprofil der zweiten Lagerkomponente zumindest abschnittsweise überdeckt. Die zweite Lagerkomponente ist aus einem Werkstoff mit einer höheren Härte als die Gleitbeschichtung hergestellt, so dass dessen Rauhigkeitsprofil nur mit einer aufwendigen Bearbeitung verringert werden kann. Dies kann beispielsweise in Form einer Einlaufphase des Gleitlagers erfolgen. Dementsprechend wird durch die Gleitbeschichtung auf der zweiten Lagerkomponente ein Rauhigkeitsprofil bereitgestellt, durch das eine Schädigung des Gleitlagerwerkstoffs auf der ersten Lagerkomponente zumindest verringert wird. Die technische Wirkung einer Einlaufphase des Gleitlagers ist dadurch bereits bei dessen Herstellung schnell herbeiführbar. Dadurch werden die technischen Vorzüge des beanspruchten Gleitlagers weiter gesteigert.

Darüber hinaus kann die zweite Lagerkomponente aus Stahl, Gusseisen, oder einem Gussstahl hergestellt sein. Derartige Werkstoffe bieten ein hohes Maß an Festigkeit, Härte und Bearbeitbarkeit. Ferner bieten Stahl, Gusseisen und Gussstahl eine hohe Haftfähigkeit für Gleitbeschichtungen, so dass die zweite Lagerkomponente für das beanspruchte Gleitlager in einfacher Weise herstellbar ist.

In einer weiteren Ausführungsform des beanspruchten Gleitlagers kann die erste Lagerkomponente an der Kontaktfläche frei von einer Beschichtung ausgebildet sein. Dabei stehen sich der Gleitlagerwerkstoff der ersten Lagerkomponente und die Gleitbeschichtung der zweiten Lagerkomponente an der Kontaktfläche, nur durch den Schmierstofffilm getrennt, unmittelbar gegenüber. Das beanspruchte Gleitlager kann dementsprechend mit geringem Aufwand hergestellt werden. Alternativ kann die erste Lagerkomponente an der Kontaktfläche mit einer Beschichtung versehen sein, durch die der Gleitlagerwerkstoff zumindest abschnittsweise überdeckt ist. Die Beschichtung kann korrespondierend zur Gleitbeschichtung auf der zweiten Lagerkomponente gewählt werden. Insbesondere kann für die Beschichtung ein Werkstoff gewählt werden, der mit der Gleitbeschichtung ein belastbares, abriebarmes und/oder langlebiges tribologisches System bildet. Des Weiteren kann mit der Beschichtung eine Versiegelung und/oder Schutz des Gleitlagerwerkstoffs erzielt werden. Durch eine Beschichtung auf dem Gleitwerkstoff auf der ersten Lagerkomponente können besonders vorteilhafte Materialpaarungen erstellt werden und so die skizzierten technischen Vorteile des beanspruchten Gleitlagers in erhöhtem Maße verwirklicht werden.

Ferner kann die Gleitbeschichtung auf der zweiten Lagerkomponente eine Dicke von 3 µm bis 20 µm aufweisen. Derartige Dicken sind mit einer Vielzahl an Herstellungsverfahren schnell und mit im Wesentlichen konstanten Oberflächenrauigkeiten schnell und zuverlässig herstellbar. Darüber hinaus ist bei derartigen Dicken der Gleitbeschichtung bei der Herstellung ein schnelles Aushärten gewährleistet. Derartige Dicken der Gleitbeschichtung bzw. der Beschichtung erlauben es, bei einer breiten Spanne an Lagerkomponenten die vorhandenen Rauhigkeitsprofile zu überdecken. Darüber hinaus ist bei derartigen Dicken der Gleitbeschichtung bei der Herstellung ein schnelles Aushärten gewährleistet.

In einer weiteren Ausführungsform des beanspruchten Gleitlagers kann die Gleitbeschichtung der zweiten Lagerkomponente zumindest teilweise aus Polytetrafluorethylen, Perfluoralkoxy-Copolymere, Polyfluoralkoxy-Polytetrafluorethylen-Copolymere, Ethylentetrafluorethylen, Polychlortrifluorethylen, fluorierte Ethylen-Propylen Copolyrnere, Polyvinylfluorid, Polyvinylidenfluorid, alternierende Copolymeren, statistischen Copolymeren, wie z.B. Perfluorethylenpropylen, Polyesterimide, Bismaleimide, Polyimidharze, wie z.B. Carboranimide, aromatische Polyimidharze, wasserstofffreie Polyimidharze, Polytriazo-Pyromellithimide, Polyamidimide, insbesondere aromatischem, Polyaryletherimide, gegebenenfalls modifiziert mit Isocyanaten, Polyetherimide, gegebenenfalls modifiziert mit Isocyanaten, Epoxyharze, Epoxyharzester, Phenolharze, Polyamid 6, Polyamid 66, Polyoxymethylen, Silikon, Polyarylether, Polyarylketon, Polyaryletherketon, Polyaryletheretherketon, Polyetheretherketon, Polyetherketon, Polyvinylidendiflourid, Polyethylensulfid, Allylensulfid, Poly-triazo-Pyromellithimid, Polyesterimid, Polyarylsulfid, Polyvinylensulfid, Polyphenylensulfid, Polysulfon, Polyethersulfon, Polyarylsulfon, Polyaryloxid, Polyarylsulfid, sowie Copolymere daraus hergestellt. Diese Stoffe bieten eine zuverlässige, belastbare und kosteneffiziente Gleitbeschichtung.

Des Weiteren kann der Gleitlagerwerkstoff, der bei der ersten Lagerkomponente eingesetzt wird, Bronze, Messing, Keramik, Weißmetall, eine CuZn-Legierung, eine AlZn-Legierung, eine CuAl-Legierung, eine AlSi-Legierung, eine AlSnSi-Legierung, eine CuSnZn-Legierung, eine CuBi-Legierung, eine Bismut-Legierung, eine Silberlegierung, eine AlBi-Legierung AlSn20Cu, AlZn4Si3 oder AlZnSi4,5 sein. Derartige Gleitwerkstoffe bieten ein hohes Maß an Belastbarkeit, können in einfacher Weise auf eine niedrige Oberflächenrauigkeit bearbeitet werden und bieten ein hohes Maß an Wirtschaftlichkeit.

Darüber hinaus kann die Gleitbeschichtung an der zweiten Lagerkomponente an der Kontaktfläche mittels physikalischer Gasabscheidung, kurz PVD, chemischer Gasabscheidung, kurz CVD, galvanischem Beschichten, Spritzen, Sprühen Einbrennen oder Eintauchen in einem Tauchbecken hergestellt sein. Die Gleitbeschichtung ist über eine Vielzahl an Herstellungsverfahren schnell und zuverlässig herstellbar. Das beanspruchte Gleitlager kann folglich in einer Vielzahl ab bereits existierenden Fertigungsstraßen mit geringem Umrüstungsaufwand hergestellt werden. Das beanspruchte Gleitlager ist dadurch besonders kosteneffizient herstellbar.

In einer weiteren Ausführungsform des beanspruchten Gleitlagers ist die erste oder die zweite Lagerkomponente als stationäre Komponente ausgebildet. Korrespondierend ist die zweite bzw. die erste Lagerkomponente als drehende Komponente ausgebildet. Dadurch ist das beanspruchte Gleitlager an eine Vielzahl von Anwendungsfällen anpassbar bzw. das Konzept des beanspruchten Gleitlagers in einfacher Weise auf eine Vielzahl an existierenden Gleitlagern übertragbar. Beispielsweise kann die zweite Lagerkomponente als stationäre Komponente ausgebildet sein, so dass bei einer Reparatur in einfacher Weise mit einer neuen Gleitlagerbeschichtung zu versehen ist. Die erste Lagerkomponente, die korrespondierend als drehende Komponente dient, kann komplett ausgetauscht werden oder in einem separaten Reparaturverfahren erneut mit Gleitlagerwerkstoff versehen werden. Hierdurch wird eine erhöhte Reparaturfreundlichkeit für das beanspruchte Gleitlager erzielt.

Ferner kann die erste oder die zweite Lagerkomponente im beanspruchten Gleitlager als Lagerschale, Lagerbuchse oder Schwimmbuchse ausgebildet sein. Das Anordnen des Gleitlagerwerkstoffs und der Gleitbeschichtung auf unterschiedlichen Lagerkomponenten ist auch Gleitlager unterschiedlicher Bauart übertragbar. Dementsprechend bietet die vorliegende Erfindung ein hohes Maß an Vielseitigkeit und erlaubt es, eine Vielzahl an existierenden Gleitlagern zu verbessern.

Die zugrundeliegende Aufgabenstellung wird auch durch eine erfindungsgemäße Gleitlageranordnung gelöst. Die Gleitlageranordnung umfasst eine Achse, auf der mittels eines Gleitlagers ein Zahnrad drehbar angeordnet ist. Das Gleitlager ist erfindungsgemäß nach einer der oben skizzierten Ausführungsformen ausgebildet.

Ebenso wird die oben dargestellte Aufgabe auch durch ein erfindungsgemäßes Getriebe gelöst. Das Getriebe umfasst ein Gehäuse, in der zumindest eine Gleitlageranordnung aufgenommen ist. Das Getriebe ist als Planetengetriebe, Stirnradgetriebe, Kegelradgetriebe oder als eine Kombination aus diesen ausgebildet. Erfindungsgemäß ist die zumindest eine Gleitlageranordnung gemäß einer der oben dargestellten Ausführungsformen ausgebildet. Das darin eingesetzte Gleitlager bietet eine erhöhte Lebensdauer, ein reduziertes Risiko für Spontanversagen und ist kosteneffizient herstellbar. Darüber hinaus erlaubt das erfindungsgemäße Gleitlager eine einfache Wartung. Dementsprechend bietet das beanspruchte Getriebe ein erhöhtes Maß an Zuverlässigkeit und verringerte Ausfallzeiten im Betrieb.

In einer Ausführungsform des beanspruchten Getriebes ist dieses mit einer Pumpe ausgestattet. Die Pumpe dient zu einem Erzeugen eines Förderdrucks auf einen Schmierstoff, wodurch der Schmierstofffilm erzeugt wird. Der Förderdruck liegt im Wesentlichen zwischen 0,5 bar und 5,0 bar. Bei einem Mischreibungsbetrieb, der sich bei derartigen Drücken in Gleitlager ausbilden kann, bietet das beanspruchte Gleitlager ein günstiges Verschleißverhalten.

Die Aufgabenstellung wird gleichermaßen durch einen Antriebsstrang für eine Windkraftanlage gelöst, der in einer Gondel der Windkraftanlage aufgenommen ist. Der Antriebsstrang umfasst eine Rotorwelle, die drehmomentübertragend mit einem Getriebe verbunden ist. Neben dem Getriebe gehört auch ein Generator zum Antriebsstrang, der mit dem Getriebe auch drehmomentübertragend verbunden ist. Das Getriebe ist erfindungsgemäß nach einer der oben skizzierten Ausführungsformen ausgebildet. Ebenso wird die Aufgabenstellung durch eine entsprechende Windkraftanlage mit einem beschriebenen Antriebsstrang gelöst.

Die beschriebene Aufgabenstellung wird ebenso durch eine erfindungsgemäße Industrie-Applikation gelöst. Die Industrie-Applikation umfasst eine Antriebseinheit, die beispielsweise als Elektromotor, Verbrennungsmotor oder Hydraulikmotor ausgebildet sein kann. Durch die Antriebseinheit wird eine Antriebsleistung zur Verfügung gestellt, die einem Getriebe zugeführt wird. Unter Wandlung der vorliegenden Drehzahl und des vorliegenden Drehmoments wird die Antriebsleistung einer Abtriebseinheit zugeführt. Die Abtriebseinheit kann beispielsweise als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Erfindungsgemäß ist das Getriebe, über das die Antriebseinheit mit der Abtriebseinheit verbunden ist, nach einer der oben skizzierten Ausführungsformen ausgebildet.

Ebenso wird die Aufgabenstellung durch ein erfindungsgemäßes Computerprogrammprodukt gelöst, das zu einem Simulieren eines Betriebsverhalten eines Gleitlagers ausgebildet ist. Zum Betriebsverhalten gehört ein fluiddynamisches Verhalten eines Schmierstofffilms, der sich im Gleitlager ausbildet kann, eine Druckverteilung an einer ersten und zweiten Lagerkomponente, und/oder ein Verschleißverhalten der ersten und/oder zweiten Lagerkomponente. Dazu ist das Gleitlager im Computerprogrammprodukt abgebildet und mit weiteren Parametern versehen, die das physikalische Verhalten des Gleitlagers näher charakterisieren. Dies können Werkstoffkennwerte sein, Angaben über Oberflächenbeschaffenheiten, Angaben über tribologische Modelle, und/oder Typeninformationen des Gleitlagers. Das Computerprogrammprodukt kann eine Datenschnittstelle aufweisen, die zu einem Eingeben von Betriebsparameters, wie beispielsweise einer Drehzahl, von Querkräften, von Mengen und/oder Beschaffenheit eines Schmierstoffs als Eingabeparameter für die Simulation des Betriebsverhaltens ausgebildet ist. Das Computerprogrammprodukt kann auch eine Datenschnittstelle zum Ausgeben von Simulationsergebnissen an weitere simulationsgerichtete Computerprogrammprodukte aufweisen. Das Computerprogrammprodukt kann als Digitaler Zwilling, auch Digital Twin genannt, ausgebildet sein. Derartige Digitale Zwilling sind beispielsweise in der Offenlegungsschrift US 2017/0286572 A1 dargestellt. Der Offenbarungsgehalt von US 2017/0286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch den Aufbau einer Ausführungsform des beanspruchten Gleitlagers;
- FIG 2: schematisch den Aufbau einer Ausführungsform der beanspruchten Gleitlageranordnung;
- FIG 3: schematisch den Aufbau einer Ausführungsform der beanspruchten Windkraftanlage;
- FIG 4: schematisch den Aufbau einer Ausführungsform der beanspruchten Industrie-Applikation.

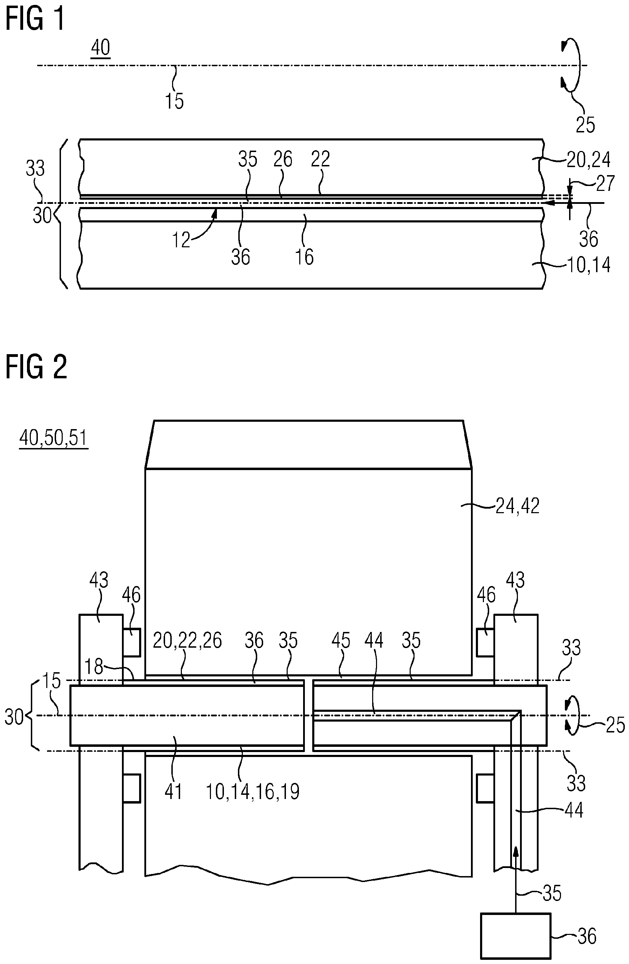

In FIG 1 ist schematisch der Aufbau einer Ausführungsform des beanspruchten Gleitlagers 30 dargestellt, das eine erste Lagerkomponente 10 und eine zweite Lagerkomponente 20 umfasst und zu einer nicht näher gezeigten Gleitlageranordnung 40 gehört. Die erste Lagerkomponente 10 und die zweite Lagerkomponente 20 sind um eine Drehachse 15 relativ zueinander beweglich, also drehbar. Eine Drehung des Gleitlagers 30 ist durch den Pfeil 25 dargestellt. Die erste Lagerkomponente 10 weist eine Oberfläche 12 auf, die einer Oberfläche 22 der zweiten Lagerkomponente 20 zugewandt ist. Zwischen den einander zugewandten Oberflächen 12, 22 der ersten und zweiten Lagerkomponente 10, 20 ist ein Schmierstofffilm 35 ausgebildet, der durch eine Zufuhr von Schmierstoff 36 erzeugt wird. Die erste Lagerkomponente 10 weist ein Grundmaterial 14 auf, auf das ein Gleitlagerwerkstoff 16 zumindest abschnittsweise aufgebracht ist, so dass die der zweiten Lagerkomponente 20 zugewandte Oberfläche 12 der ersten Lagerkomponente 10 durch den Gleitlagerwerkstoff 16 gebildet wird. An der Oberfläche 22 der zweiten Lagerkomponente 20 ist an dieser an der Oberfläche 22 auf einem Grundmaterial 24 eine Gleitbeschichtung 26 aufgebracht. Die Gleitbeschichtung 26 und der Gleitlagerwerkstoff 16 weisen jeweils eine reduzierte Oberflächenrauigkeit auf und bilden ein verschleißarmes tribologisches System. Im Betrieb des Gleitlagers 30 gleiten die erste und zweite Lagerkomponente 20 entlang einer Kontaktfläche 33 aufeinander ab, wobei die Drehung 25 durch den Schmierstofffilm 35 unterstützt wird. Die Gleitbeschichtung 26 weist eine Dicke 27 von 3 µm bis 20 µm auf und ist zumindest teilweise aus Polytetrafluorethylen, Perfluoralkoxy-Copolymere, Polyfluoralkoxy-Polytetrafluorethylen-Copolymere, Ethylentetrafluorethylen, Polychlortrifluorethylen, fluorierte Ethylen-Propylen Copolymer, Polyvinylfluorid, Polyvinylidenfluorid, alternierende Copolymeren, statistischen Copolymeren, wie z.B. Perfluorethylenpropylen, Polyesterimide, Bismaleimide, Polyimidharze, wie z.B. Carboranimide, aromatische Polyimidharze, wasserstofffreie Polyimidharze, Polytriazo-Pyromellithimide, Polyamidimide, insbesondere aromatischem, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikon, Polyarylether, Polyarylketon, Polyaryletherketon, Polyaryletheretherketon, Polyetheretherketon, Polyetherketon, Polyvinylidendiflourid, Polyethylensulfid, Allylensulfid, Poly-triazo-Pyromellithimid, Polyesterimid, Polyarylsulfid, Polyvinylensulfid, Polyphenylensulfid, Polysulfon, Polyethersulfon, Polyarylsulfon, Polyaryloxid, Polyarylsulfid, oder Copolymeren daraus hergestellt. Das Grundmaterial 24 der zweiten Lagerkomponente 20 ist Stahl, Gusseisen oder Gussstahl. Dementsprechend ergibt sich für das Grundmaterial 24 und die Gleitbeschichtung 26 der zweiten Lagerkomponente 20 eine vorteilhafte gegenseitige Haftung. Durch die Gleitbeschichtung 26 wird ein vorhandenes Rauhigkeitsprofil des Grundmaterial 24 der zweiten Lagerkomponente 20 zumindest teilweise überdeckt. Dadurch ist an der Kontaktfläche 33 das tribologische System mit dem Gleitlagerwerkstoff 16 und der Gleitbeschichtung 26 unabhängig vom Grundmaterial 24 der zweiten Lagerkomponente 20. Dementsprechend ist eine aufwändige glättende Bearbeitung des Grundmaterials 24 der zweiten Lagerkomponente 20 entbehrlich.

Ferner ist der Gleitlagerwerkstoff 16 zumindest teilweise aus Bronze, Messing, Keramik, Weißmetall, eine CuZn-Legierung, eine AlZn-Legierung, eine CuAl-Legierung, eine AlSi-Legierung, eine AlSnSi-Legierung, eine CuSnZn-Legierung, eine CuBi-Legierung, eine Bismut-Legierung, eine Silberlegierung, eine AlBi-Legierung AlSn20Cu, AlZn4Si3 oder AlZnSi4,5 hergestellt. Die genannten Gleitlagerwerkstoffe 16 zeigen ein vorteilhaftes Einlaufverhalten bei einem Kontakt mit den oben genannten Gleitbeschichtungen 26. Hierdurch wird eine Einlaufphase für das Gleitlager 30 verkürzt oder vollständig entbehrlich. Es ergibt sich eine Vielzahl vorteilhafter Materialpaarungen für den Gleitlagerwerkstoff 16 und die Gleitbeschichtung 26.

FIG 2 zeigt schematisch den Aufbau einer Ausführungsform der beanspruchten Gleitlageranordnung 40, die zu einem nicht näher gezeigten Getriebe 50 mit nicht näher gezeigtem Gehäuse 51 gehört. Die Gleitlageranordnung 40 umfasst eine Achse 41, die als stationäre erste Lagerkomponente 10 eines Gleitlagers 30 dient. Die Achse 41 ist dazu an ihren Enden in Wandungen 43 aufgenommen, die als Wangen eines Planetenträgers ausgebildet sind, an denen Anlaufscheiben 46 angeordnet sind. Die Gleitlageranordnung 40 umfasst auch ein Zahnrad 42, das um eine Drehachse 15 drehbar auf der Achse 41 aufgenommen ist. Das Zahnrad 42 dient in der Gleitlageranordnung 40 als bewegliche, also drehbare zweite Lagerkomponente 20. Eine Drehung des Zahnrads 42 ist durch den Pfeil 25 versinnbildlicht. Ferner sind in der Achse 41 und einer Wange 43 Ausnehmungen 44 ausgebildet, durch die über Pumpe 36 Schmierstoff 35 gefördert wird. Der Schmierstoff 35 bildet an einer Kontaktfläche 33 einen Schmierstofffilm 36, so dass die erste Lagerkomponente 10 mit der zweiten Lagerkomponente 20 ein Gleitlager 30 bildet. Die Kontaktfläche 33 ist in FIG 2 im Wesentlichen zylinderförmig.

Die erste Lagerkomponente 10 umfasst die Achse 41, die auch das Grundmaterial 14 bildet, an deren Oberfläche 12 umlaufend ein Gleitlagerwerkstoff 16 angebracht ist. Dadurch bildet der Gleitlagerwerkstoff 16 eine Lagerbuchse 19. Der Gleitlagerwerkstoff 16 bedeckt die Achse 41, also das Grundmaterial 14, entlang der Drehachse 15 zumindest teilweise. Ferner ist der Gleitlagerwerkstoff 16 mit einer Beschichtung 18 versehen, durch die die Oberfläche 12 der ersten Lagerkomponente 18 weiter geglättet ist, also ein reduzierte Oberflächenrauigkeit aufweist. Gegenüber dem Gleitlagerwerkstoff 16 ist eine Innenseite 45 des Zahnrads 42 angeordnet, die im montierten Zustand den Gleitlagerwerkstoff 16 entlang des Zahnrads 42 umlaufend umgibt. Das Zahnrad 42 dient als zweite Lagerkomponente 20 des Gleitlagers 30 und bildet ein Grundmaterial 24 der zweiten Lagerkomponente 20. Die Innenseite 45 des Zahnrads 42 bildet dadurch eine Oberfläche 22 der zweiten Lagerkomponente 20 und ist mit einer Gleitbeschichtung 26 versehen. Auch die Gleitbeschichtung 26 ist, korrespondierend zum Gleitlagerwerkstoff 16, umlaufend auf der Oberfläche 12, also der Achse 41, angebracht. Die Oberflächen 12, 22 der ersten und zweiten Lagerkomponente 10, 20 sind umlaufend ausgebildet und einander zugewandt. Im Betrieb der Gleitlageranordnung 40 gleitet das Zahnrad 42, und damit die zweite Lagerkomponente 20 auf der Achse 41, also der ersten Lagerkomponente 10, wobei diese lediglich durch den Schmierstofffilm 35 getrennt sind. Ein Rauigkeitsprofil der Achse 41 wird durch die Gleitbeschichtung 26 überdeckt. Im Zusammenspiel mit dem Gleitlagerwerkstoff 16 an der Oberfläche 12 der ersten Lagerkomponente 10, der mit der Beschichtung 18 versehen ist, wird so ein weiter reduzierter Reibwert erzielt, der wiederum ein verringertes Risiko für ein Spontanversagen des Gleitlagers 30 gewährleistet.

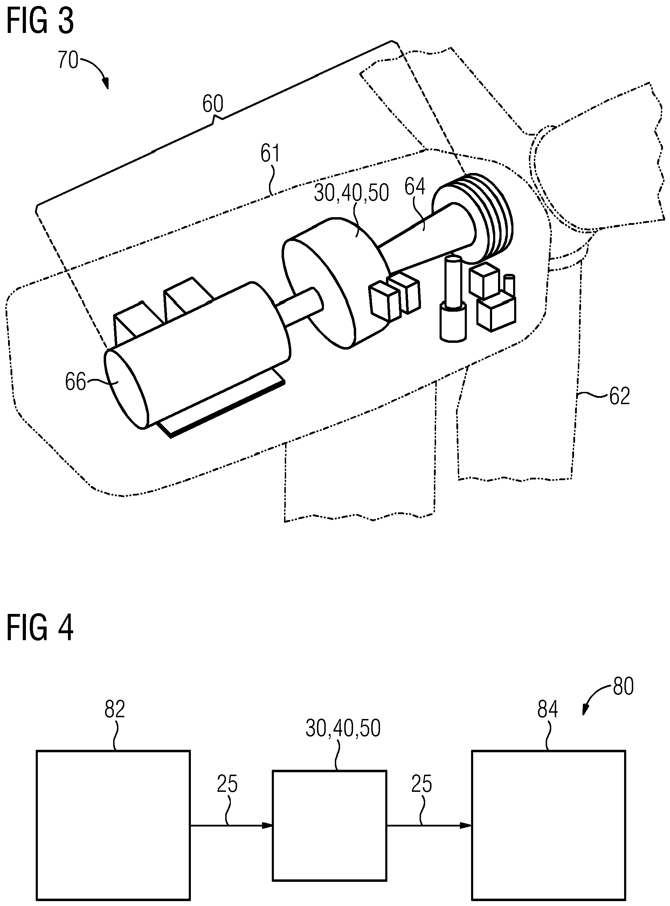

In FIG 3 ist schematisch der Aufbau einer Ausführungsform einer beanspruchten Windkraftanlage 70 dargestellt. Die Windkraftanlage 70 umfasst einen Antriebsstrang 60, der in einer Gondel 61 aufgenommen ist, an der ein Rotor 62 angebracht ist. Der Antriebsstrang 60 umfasst eine Rotorwelle 64, ein Getriebe 50 und einen Generator 66. Der Rotor 62 ist mit der Rotorwelle 64 verbunden, die wiederum drehmomentübertragend mit dem Getriebe 50 gekoppelt ist. Das Getriebe 50 ist drehmomentübertragend mit dem Generator 66 verbunden. Das Getriebe 50 ist als Planetengetriebe ausgebildet und verfügt über zumindest eine Gleitlageranordnung 40 nach einer der oben skizzierten Ausführungsformen. Dementsprechend weist die zumindest eine Gleitlageranordnung 40 ein Gleitlager 30 auf, das nach einer der oben beschriebenen Ausführungsformen ausgebildet ist.

FIG 4 zeigt schematisch den Aufbau einer Ausführungsform einer beanspruchten Industrie-Applikation 80. Die Industrie-Applikation 80 umfasst eine Abtriebseinheit 82, die beispielsweise als Elektromotor, Verbrennungsmotor oder Hydraulikmotor ausgebildet sein kann. Durch die Antriebseinheit 82 wird eine Antriebsleistung, also eine Drehung 25, zur Verfügung gestellt, die einem Getriebe 50 zugeführt wird. Unter Wandlung der vorliegenden Drehzahl und des vorliegenden Drehmoments wird die Antriebsleistung einer Abtriebseinheit 84 zugeführt. Die Abtriebseinheit 84 kann beispielsweise als mechanische Anwendung ausgebildet sein, so dass die Industrie-Applikation 80 als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet ist. Erfindungsgemäß ist das Getriebe 50, über das die Antriebseinheit 82 mit der Abtriebseinheit 84 verbunden ist, nach einer der oben skizzierten Ausführungsformen ausgebildet. Dementsprechend ist das Getriebe 50 mit zumindest einer Gleitlageranordnung 40 nach einer der oben dargestellten Ausführungsformen versehen und verfügt über ein Gleitlager 30 gemäß zumindest einer der oben beschriebenen Ausführungsformen.

## Patentansprüche

1. Gleitlager (30) für ein Getriebe (50), umfassend eine erste Lagerkomponente (10), die relativ zu einer zweiten Lagerkomponente (20) drehbar ausgebildet ist, und zwischen denen an einer Kontaktfläche (33) ein Schmierstofffilm (35) ausbildbar ist, und die erste Lagerkomponente (10) zumindest teilweise aus einem Gleitlagerwerkstoff (16) hergestellt ist, **dadurch gekennzeichnet, dass** die zweite Lagerkomponente (20) an der Kontaktfläche (33) eine Gleitbeschichtung (26) aufweist.

2. Gleitlager (30) nach Anspruch 1, **dadurch gekennzeichnet, dass** durch die Gleitbeschichtung (26) der zweiten Lagerkomponente (20) zumindest abschnittsweise ein Rauhigkeitsprofil der zweiten Lagerkomponente (20) überdeckt ist.

3. Gleitlager (30) nach Anspruch 1 oder 2, **dadurch gekennzeichnet , dass** die zweite Lagerkomponente (20) aus Stahl, Gusseisen und/oder einem Gussstahl hergestellt ist.

4. Gleitlager (30) nach einem der Ansprüche 1 oder 3, **dadurch gekennzeichnet, dass** die erste Lagerkomponente (10) an der Kontaktfläche (33) frei von einer Beschichtung (18) ist oder eine Beschichtung (18) aufweist.

5. Gleitlager (30) nach einem der Ansprüche 1 bis 4, **dadurch gekennzeichnet, dass** die Gleitbeschichtung (26) auf der zweiten Lagerkomponente (10, 20) zwischen 3µm und 20 µm dick ist.

6. Gleitlager (30) nach einem der Ansprüche 1 bis 5, **dadurch gekennzeichnet, dass** die Gleitbeschichtung (26) der zweiten Lagerkomponente (20) zumindest teilweise aus Polytetrafluorethylen, Perfluoralkoxy-Copolymere, Polyfluoralkoxy-Polytetrafluorethylen-Copolymere, Ethylentetrafluorethylen, Polychlortrifluorethylen, fluorierte Ethylen-Propylen Copolymer, Polyvinylfluorid, Polyvinylidenfluorid, alternierende Copolymeren, statistischen Copolymeren, wie z.B. Perfluorethylenpropylen, Polyesterimide, Bismaleimide, Polyimidharze, wie z.B. Carboranimide, aromatische Polyimidharze, wasserstofffreie Polyimidharze, Polytriazo-Pyromellithimide, Polyamidimide, insbesondere aromatischem, Polyaryletherimide, gegebenenfalls modifiziert mit Isocyanaten, Polyetherimide, gegebenenfalls modifiziert mit Isocyanaten,Epoxyharze, Epoxyharzester, Phenolharze, Polyamid 6, Polyamid 66, Polyoxymethylen, Silikon, Polyarylether, Polyarylketon, Polyaryletherketon, Polyaryletheretherketon, Polyetheretherketon, Polyetherketon, Polyvinylidendiflourid, Polyethylensulfid, Allylensulfid, Polytriazo-Pyromellithimid, Polyesterimid, Polyarylsulfid, Polyvinylensulfid, Polyphenylensulfid, Polysulfon, Polyethersulfon, Polyarylsulfon, Polyaryloxid, Polyarylsulfid, sowie Copolymere daraus hergestellt ist.

7. Gleitlager (30) nach einem der Ansprüche 1 bis 6, **dadurch gekennzeichnet, dass** der Gleitlagerwerkstoff (16) als Bronze, Messing, Keramik, Weißmetall, eine CuZn-Legierung, eine AlZn-Legierung, eine CuAl-Legierung, eine AlSi-Legierung, eine AlSnSi-Legierung, eine CuSnZn-Legierung, eine CuBi-Legierung, eine Bismut-Legierung, eine Silberlegierung, eine AlBi-Legierung AlSn20Cu, AlZn4Si3 oder AlZnSi4,5 ausgebildet ist.

8. Gleitlager (30) nach einem der Ansprüche 1 bis 7, **dadurch gekennzeichnet, dass** die Gleitbeschichtung (26) der zweiten Lagerkomponente (20) an der Kontaktfläche (33) mittels physikalischer Gasabscheidung, chemische Gasabscheidung, galvanisches Beschichten, Spritzen, Sprühen, Einbrennen oder Eintauchen aufgebracht ist.

9. Gleitlager (30) nach einem der Ansprüche 1 bis 8, **dadurch gekennzeichnet, dass** die erste oder die zweite Lagerkomponente (10, 20) stationär ausgebildet ist.

10. Gleitlager (30) nach einem der Ansprüche 1 bis 9, **dadurch gekennzeichnet, dass** die erste oder die zweite Lagerkomponente (10, 20) als Lagerschale, Lagerbuchse (19) oder Schwimmbuchse ausgebildet ist.

11. Gleitlageranordnung (40), umfassend eine Achse, auf mittels eines Gleitlagers (30) ein Zahnrad (42) drehbar angeordnet ist, **dadurch gekennzeichnet, dass** das Gleitlager (30) nach einem der Ansprüche 1 bis 10 ausgebildet ist.

12. Getriebe (50), umfassend ein Gehäuse (51), in der eine Gleitlageranordnung (40) aufgenommen ist, und das Getriebe (50) als Planetengetriebe, Stirnradgetriebe, Kegelradgetriebe, oder Kombination daraus ausgebildet ist, **dadurch gekennzeichnet, dass** die Gleitlageranordnung (40) nach Anspruch 11 ausgebildet ist.

13. Getriebe (50) nach Anspruch 12, **dadurch gekennzeichnet, dass** das Getriebe (50) mit einer Pumpe (36) zur Erzeugung des Schmierstofffilms (35) ausgestattet ist.

14. Antriebsstrang (60) einer Windkraftanlage (70), umfassend eine Rotorwelle (64), die drehmomentübertragend mit einem Getriebe (50) verbunden ist, das drehmomentübertragend mit einem Generator (66) verbunden ist, **dadurch gekennzeichnet, dass** das Getriebe (50) nach Anspruch 12 oder 13 ausgebildet ist.

15. Computerprogrammprodukt zum Simulieren eines Betriebsverhaltens eines Gleitlagers (30), **dadurch gekennzeichnet, dass** das Gleitlager (30) nach einem der Ansprüche 1 bis 10 ausgebildet ist.
